(19) Europäisches Patentamt / European Patent Office / Office européen des brevets

(11) **EP 1 262 014 B1**

(12) **EUROPÄISCHE PATENTSCHRIFT**

(45) Veröffentlichungstag und Bekanntmachung des Hinweises auf die Patenterteilung:
**01.07.2009   Patentblatt 2009/27**

(51) Int Cl.:
***H02P 7/29*** *(2006.01)*

(21) Anmeldenummer: **00991638.8**

(22) Anmeldetag: **23.12.2000**

(86) Internationale Anmeldenummer:
**PCT/EP2000/013253**

(87) Internationale Veröffentlichungsnummer:
**WO 2001/059921 (16.08.2001 Gazette 2001/33)**

(54) **ANORDNUNG ZUR SPEISUNG EINES VERBRAUCHERS MIT NICHT KONTINUIERLICHE STROMAUFNAHME, INSBESONDERE EINES GLEICHSTROMMOTORS, AUS EINEM GLEICHSTROMNETZ**

ARRANGEMENT FOR SUPPLYING A USER, ESPECIALLY A D.C. MOTOR, THAT CONSUMES POWER IN A NON-CONTINUOUS MANNER FROM A D.C. SYSTEM

DISPOSITIF POUR L'ALIMENTATION, A PARTIR D'UN RESEAU A COURANT CONTINU, D'UN CONSOMMATEUR DONT LA CONSOMMATION SE FAIT PAR INTERMITTENCES, EN PARTICULIER D'UN MOTEUR A COURANT CONTINU

(84) Benannte Vertragsstaaten:
**AT BE CH CY DE DK ES FI FR GB GR IE IT LI LU MC NL PT SE TR**

(30) Priorität: **07.02.2000   DE 10005397**

(43) Veröffentlichungstag der Anmeldung:
**04.12.2002   Patentblatt 2002/49**

(73) Patentinhaber: **ebm-papst St. Georgen GmbH & Co. KG**
**78112 St. Georgen (DE)**

(72) Erfinder: **KARWATH, Arno**
**78652 Deißlingen (DE)**

(74) Vertreter: **Raible, Hans**
**Schoderstrasse 10**
**70192 Stuttgart (DE)**

(56) Entgegenhaltungen:
| | |
|---|---|
| **EP-A- 0 007 622** | **EP-A- 0 321 663** |
| **DE-A- 3 607 014** | **DE-A- 4 003 522** |
| **DE-U- 29 606 939** | **US-A- 5 821 709** |
| **US-A- 5 896 020** | **US-A- 5 898 296** |

• **PATENT ABSTRACTS OF JAPAN vol. 018, no. 540 (E-1616), 14. Oktober 1994 (1994-10-14) & JP 06 189586 A (OKI ELECTRIC IND CO LTD), 8. Juli 1994 (1994-07-08)**
• **CASTAGNET T ET AL: "DIGITAL CONTROL FOR BRUSH CD MOTOR" IEEE TRANSACTIONS ON INDUSTRY APPLICATIONS,US,IEEE INC. NEW YORK, Bd. 30, Nr. 4, Juli 1994 (1994-07) - Juli 1994 (1994-07), Seiten 883-888, XP000469573 new-york ISSN: 0093-9994**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anordnung zur Speisung eines Gleichstrommotors aus einem Gleichstromnetz.

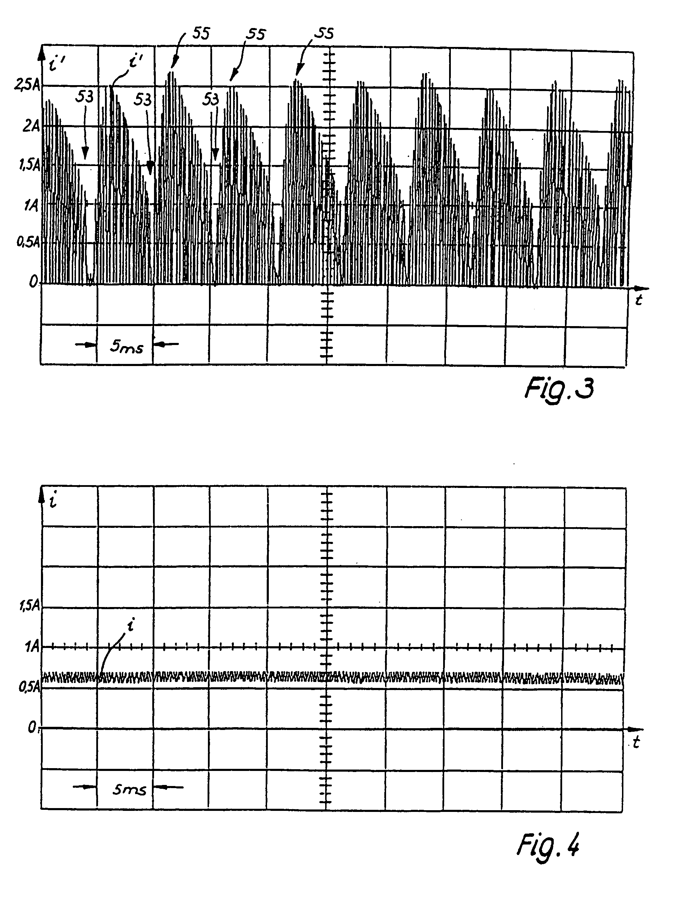

Speziell im Telekommunikationsbereich gibt es sehr hohe Anforderungen bezüglich der EMV (elektromagnetische Verträglichkeit). Häufig werden in Anlagen der Nachrichtentechnik Elektromotoren verwendet, z.B. zum Antrieb von Lüftern, und die Endstufen solcher Motoren werden, z.B. zur Strombegrenzung, mit impulsförmigen Strömen versorgt, vgl. nachfolgend die Fig. 3. Solche impulsförmigen Ströme verursachen impulshaltige Störsignale auf den Zuleitungen zu solchen Motoren, und zu ihrer Unterdrückung werden sehr große Kondensatoren und Induktivitäten benötigt. Der Bauraum ist jedoch oft begrenzt, und die Kosten solcher Filter sind hoch.

Die Filterung hochfrequenter Störungen bereitet im Allgemeinen keine großen Probleme. Besonders hohe Anforderungen bestehen jedoch im hörbaren Frequenzbereich von 25 Hz bis 20 kHz, denn beim Telefonieren ist ein brummendes Hintergrundgeräusch besonders störend. Die Drehfrequenz solcher Motoren liegt im Bereich von 25 bis 200 Hz. In diesem Frequenzbereich werden deshalb die höchsten Störpegel erreicht. Das Ausfiltern solcher niederfrequenter Störungen ist mit herkömmlichen Filtern nicht mehr möglich.

Aus der US 5 898 296 A kennt man einen Antrieb für einen Radiallüfter einer Mobilfunkstation. Um diesen Lüfter herum sind nach Art von Tortenstücken Verstärker für die verschiedenen Mobilfunkkanäle angeordnet. Die Verstärker haben Kühlkörper, und an einem von diesen ist über eine Feder ein Temperatursensor befestigt, z.B. ein Thermistor. Dieser bestimmt über eine Sollwertschaltung den Strom, der durch einen p-Kanal-MOSFET fließen soll, der im so genannten linearen Betrieb betrieben wird, wobei er als variabler Widerstand wirkt.

Im Winter, wenn es in einer Mobilfunkstation, z.B. auf einem Kirchturm, oftmals eisig kalt ist, braucht man nur wenig oder gar keine Lüftung, und der Widerstand des MOSFET wird dann durch die Sollwertschaltung auf einen solchen Wert eingestellt, dass der Lüfter nur langsam läuft. Dabei wird viel Energie im MOSFET verheizt.

Diese Schaltung ist nur dort einsetzbar, wo die Sollwertschaltung einen Temperaturwert von einem zu kühlenden Gerät erhält, ist aber nicht generell zur Stromversorgung von Motoren geeignet, wo diese Voraussetzung keineswegs immer gegeben ist.

Es ist deshalb eine Aufgabe der Erfindung, eine neue Anordnung zur Speisung eines Gleichstrommotors aus einem Gleichstromnetz bereitzustellen, welche die Forderungen der EMV berücksichtigt.

Nach der Erfindung wird diese Aufgabe gelöst durch eine Anordnung gemäß Patentanspruch 1. Dadurch, dass ein Stromregler verwendet wird, fließt zu einer erfindungsgemäßen Anordnung im Betrieb ein Gleichstrom, der eine sehr geringe Restwelligkeit hat. Während der Zeiträume, in denen der Verbraucher, z.B. wegen eines Regelvorgangs, kurzzeitig keinen oder nur wenig Strom aufnimmt, wird der Dem Gleichstrom-Zwischenkreis zugeordnete Kondensator durch den Stromregler aufgeladen. Wenn der Gleichstrommotor, typisch ein elektronisch kommutierter Motor, kurzzeitig mehr Strom benötigt, als vom Stromregler bereitgestellt werden kann, wird dieser Kondensator partiell entladen und gibt einen Teil seiner Energie an den Motor ab. Dadurch wird also der Gleichspannung am Motor ein geringer Wechselspannungsanteil überlagert, da die Spannung am Kondensator durch diese Lade- und Entladevorgänge schwankt. Solange aber dieser Wechselspannungsanteil, der maßgeblich von der Größe des Kondensators beeinflusst wird, klein ist im Vergleich zum Gleichspannungsanteil, hat er keinen wesentlichen Einfluss auf den Lauf des Motors. Andererseits passt sich bei der Erfindung der Stromregler automatisch dem Strombedarf des Motors an, d.h. wenn Drehzahl und Spannung an diesem sinken, wird der Sollwert des Stromreglers erhöht, und wenn Drehzahl und Spannung steigen, wird der Sollwert herabgesetzt. Es handelt sich also um einen adaptiven Stromregler, der sich automatisch an Änderungen des Strombedarfs bei einem angeschlossenen Motor anpasst.

Durch die Erfindung erhält man also ein aktives Filter, das niederfrequente Schwankungen in der Stromaufnahme eines Motors automatisch ausgleicht und dadurch den Forderungen nach elektromagnetischer Verträglichkeit sehr gut entspricht. Es eignet sich deshalb besonders gut für die Verwendung in Anlagen der Telekommunikation.

Dabei wird die Anordnung mit Vorteil so ausgelegt, dass der Spannungsabfall am Stromregler etwa dem Wechselspannungsanteil der Spannung am Gleichstrom-Zwischenkreis entspricht. Überraschend hat sich dies bei Versuchen als sehr vorteilhaft erwiesen.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1      ein Blockschaltbild einer ersten bevorzugten Ausführungsform einer erfindungsgemäßen Anordnung,

Fig. 2      ein Schaltbild, welches Einzelheiten des Ausführungsbeispiels der Fig. 1 zeigt,

Fig. 3      ein Oszillogramm des in Fig. 1 mit i' bezeichneten Stromes durch einen Verbraucher 12; bei diesem Ausführungsbeispiel handelt es sich um einen zwelpulsigen, zweisträngigen elektronisch kommutierten Gleichstrommotor, wie er z.B. aus der DE 23 46 380 im Prinzip bekannt ist,

Fig. 4    ein Oszillogramm des in Fig. 1 und 2 mit i bezeichneten Stromes durch den Messwiderstand 26 des Stromreglers 30,

Fig. 5    ein Oszillogramm des Wechselspannungsanteils der in Fig. 1 und 2 mit UzK bezeichneten Spannung,

Fig. 6    ein Oszillogramm der in Fig. 1 und 2 mit UT bezeichneten Spannung zwischen Drain D und Source S des MOSFET 24,

Fig. 7    die Darstellung eines zweiten Ausführungsbeispiels der Erfindung, analog Fig. 2,

Fig. 8    die Darstellung eines bei Fig. 7 verwendeten Zeitglieds,

Fig. 9    eine stark schematisierte Darstellung zur Erläuterung einer Einzelheit,

Fig. 10    eine Variante 10" zu Fig. 2, bei der sich die elektronische Sicherung 240 in regelmäßigen Abständen selbst zurücksetzt,

Fig. 11    ein Schaubild zur Erläuterung der Wirkungsweise von Fig. 10, und

Fig. 12    eine Variante zu Fig. 2 oder Fig. 10 mit einer Notstromversorgung für den Fall, dass der MOSFET 24 defekt wird.

In den nachfolgenden Figuren werden für gleiche oder gleich wirkende Teile jeweils dieselben Bezugszeichen verwendet, und die betreffenden Teile werden gewöhnlich nur einmal beschrieben.

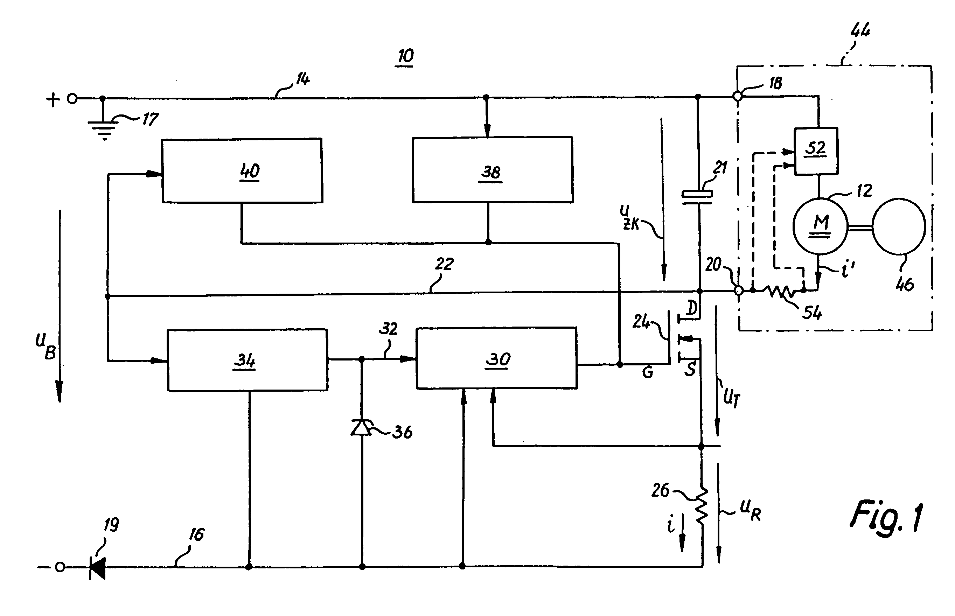

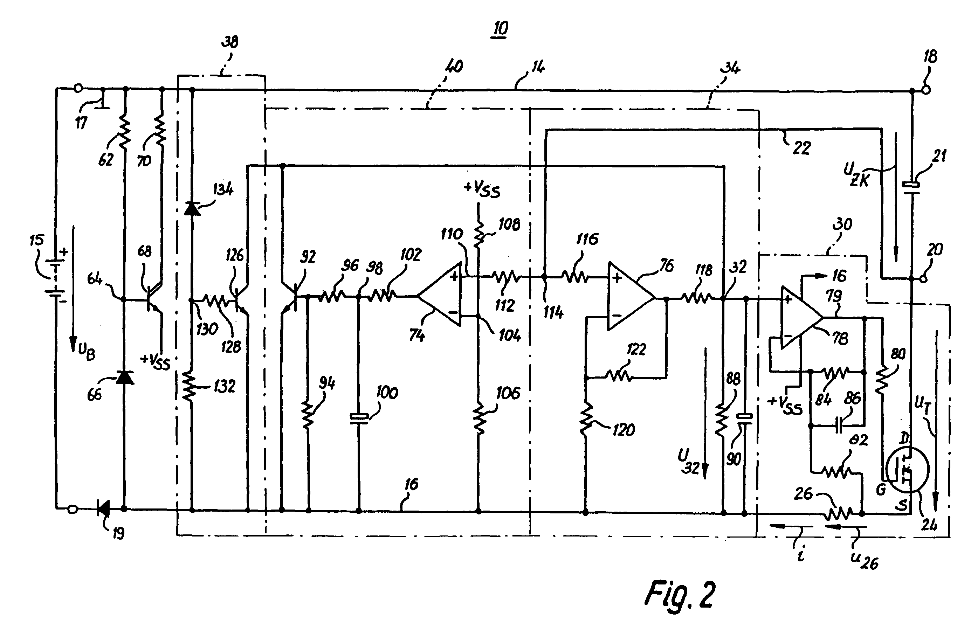

**Fig. 1** zeigt ein Übersichtsschema einer ersten Ausführungsform einer erfindungsgemäßen Anordnung 10. Diese dient zum Betrieb eines Verbrauchers mit nicht kontinuierlicher Stromaufnahme, insbesondere eines beliebigen Elektromotors 12, an einer Gleichspannung $U_B$, an der diese Anordnung mittels einer Plusleitung 14 und einer Minusleitung 16 angeschlossen wird. Die Plusleitung 14 ist bei dieser Ausführungsform die Referenzpotenzialleitung und an Masse 17 angeschlossen. In der negativen Leitung 16 liegt eine Schutzdiode 19 als Schutz gegen Anschluss mit falscher Polarität. Die Leitungen 14, 16 können z.B. an einen 48 V-Akkumulator 15 (Fig. 2) angeschlossen sein, oder an ein entsprechendes Netzteil. Der Motor 12 wird an zwei Ausgänge 18, 20 der Anordnung 10 angeschlossen. Ausgang 18 ist direkt mit der Plusleitung 14 verbunden, Ausgang 20 mit einer Zwischenkreisspannung 22. Zwischen den Ausgängen 18 und 20 liegt ein dem Gleichstrom-Zwischenkreis zugeordneter Kondensator 21 mit hoher Kapazität, der als Energiespeicher für den Verbraucher 12 dient.

Zwischen dem Anschluss 20 und der Minusleitung 16 liegen ein N-Kanal-Feldeffekttransistor 24 und - in Reihe mit diesem - ein Widerstand 26, der zur Erfassung des Stroms i dient, welcher durch den Messwiderstand 26 fließt und durch die Anordnung 10 auf einen im wesentlichen konstanten Wert geregelt wird.

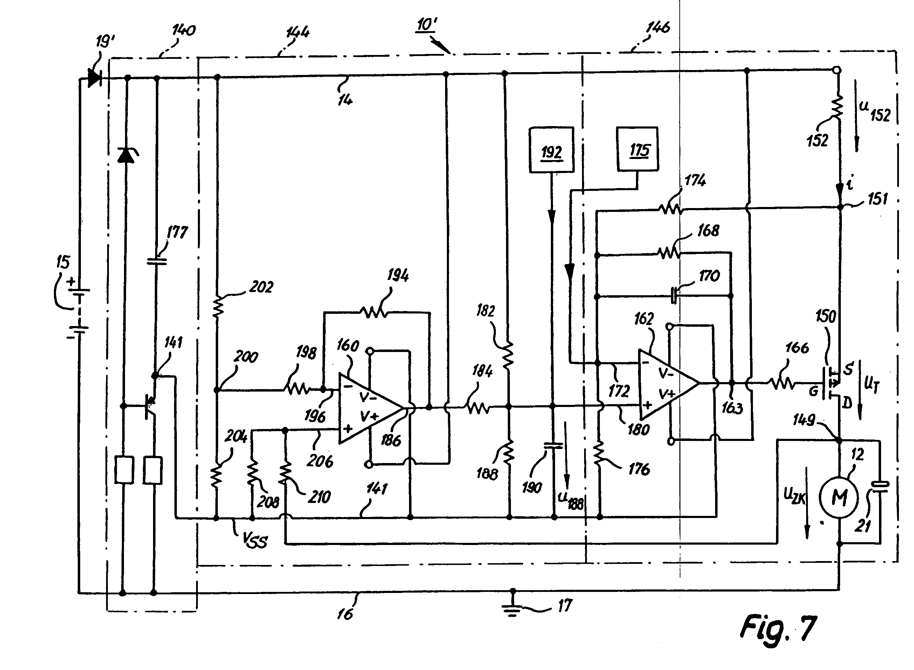

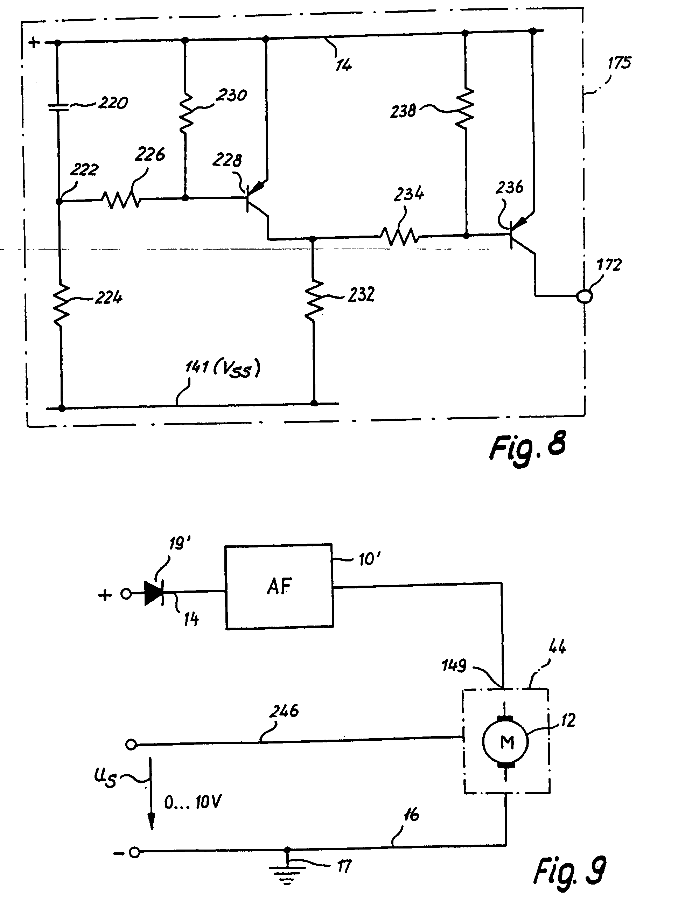

Bei dem Ausführungsbeispiel der Fig. 1 bis 6 ist die Zuleitung 14 die Referenzpotenzialleitung, und ein aktives Filter 24, 30 ist in der negativen Zuleitung 16 des Motors 12 angeordnet. Der Grund hierfür ist, dass in der Telekom-Industrie normalerweise mit einer Versorgungsspannung von -48 V gearbeitet wird, weshalb das Bezugspotenzial 0 V, also das Potenzial an der Leitung 14, positiv ist. Steuersignale werden auf dieses Potenzial von +0 V bezogen. Damit auf der Bezugspotenzialleitung 14 keine Spannungsabfälle entstehen, befindet sich die Schutzdiode 19 in der negativen Zuleitung. Wenn ein Motor 12 mit negativem Referenzpotenziat verwendet werden soll, wird man ein aktives Filter verwenden, das im positiven Zweig des Motors 12 angeordnet ist, und in diesem Fall wird die negative Leitung 16 an Masse angeschlossen. Dies zeigen die Fig. 7 und 8.

Zwischen den Leitungen 14 und 22 erhält man eine Zwischenkreisspannung $U_{ZK}$. Am Transistor 24, der als variabler Widerstand betrieben wird, erhält man eine Spannung $U_T$, die zwischen Drain D und Source S des Transistors 24 gemessen wird, und am Widerstand 26 erhält man eine Spannung $U_R$, deren Höhe vom Strom i abhängig ist. Die Betriebsspannung $U_B$ lässt sich deshalb wie folgt darstellen

$$U_B = U_{ZK} + U_T + U_R \qquad \qquad \dots (1)$$

Da $U_R$ gewöhnlich sehr klein ist, gilt angenähert

$$U_B = U_{ZK} + U_T \qquad \qquad \dots (2)$$

Das Arbeitsprinzip der vorliegenden Anordnung besteht nun darin, durch einen Stromregler 30 den Strom i durch den Transistor 24 auf einen Sollwert 32 zu regeln, der bei konstanter Last des Motors 12 konstant ist. Dadurch fließt auf den Zuleitungen 14, 16 der Anordnung 10 ein im wesentlichen konstanter und oberwellenfreier Gleichstrom i.

Ändert sich die Belastung des Motors 12, so wird durch einen zweiten Regler, der im folgenden als Zwischenkreisregler 34 bezeichnet wird, der Sollwert 32 für den Stromregler 30 entsprechend verändert. Wird z.B. der Motor 12 durch Belastung langsamer, so sinkt die Spannung Uzk, d.h. gemäß Gleichung (2) nimmt die Spannung $U_T$ zu. Die Summe der Spannungen $U_T$ und UR wird dem Zwischenkreisregler 34 zugeführt. Und dieser erhöht in diesem Fall den Strom-Sollwert 32 des Stromreglers 30, so dass letzterer den Transistor 24 auf einen höheren Strom, also einen niedrigeren Widerstand, einstellt, wodurch sich die Drehzahl des Motors 12 wieder erhöht und gleichzeitig eine Überlastung des Transistors 24 vermieden wird, weil die Spannung $U_T$ an ihm wieder abnimmt. (Die Verluste im Transistor 24 entsprechen dem Produkt i x $U_T$, und diese Verluste dürfen einen bestimmten Wert nicht überschreiten).

Die Anordnung nach Fig. 1 enthält auch eine Begrenzung des Strom-Sollwerts am Eingang 32, hier symbolisch dargestellt als Zenerdiode 36. Diese begrenzt beim Start des Motors 12 den Strom-Sollwert 32 auf einen zulässigen Wert, um eine Überlastung des Transistors 24 durch einen hohen Einschaltstrom zu vermeiden. Dasselbe gilt bei einem Kurzschluss. Hierdurch wird automatisch auch ein Strom begrenzt, der beim Einschalten durch das Aufladen des Kondensators 21 entsteht. Dieser Strom würde sonst nur durch den Widerstand der Zuleitungen 14, 16 und den Widerstand 26 begrenzt, die zusammen z.B. einen Wert von 0,5 Ω haben. Für $U_B$ = 50 V ergäbe dies - ohne Strombegrenzung - einen Einschaltstrom von 50/0,5 = 100 A, was Schäden an Schalterkontakten verursachen könnte.

Als Schutz gegen zu hohe Werte der Spannung $U_B$ ist bevorzugt auch ein Überspannungsschutz 38 vorgesehen. Dieser wirkt direkt oder indirekt auf das Gate G des Transistors 24, um dieses bei Auftreten eines Überspannungsimpulses zu entladen, wodurch die Spannung UzK am Motor 12 begrenzt und dieser vor Schäden durch Überspannung geschützt wird.

Ferner ist bevorzugt auch eine Sicherungsfunktion 40 vorgesehen, um den Transistor 24 gegen Überlastung zu schützen. Wenn die Spannung $U_T$ über einen definierten Wert hinaus ansteigt, der einem höheren Wert entspricht als durch den maximalen Sollwert 32 am Ausgang des Zwischenkreisreglers 34 vorgegeben wird, wird nach Ablauf einer vorgegebenen Zeitspanne der Transistor 24 direkt an seinem Gate G abgeschaltet. Die vorgegebene Zeit wird so gewählt, dass sich der Transistor 24 nicht zu stark erwärmen kann. Um den Motor 12 erneut einzuschalten, muss nach einem Ansprechen der Sicherung 40 die Anordnung 10 kurzzeitig abgeschaltet werden. Dies entspricht also dem Prinzip einer elektronischen Sicherung.

Fig. 1 zeigt beispielhaft und stark schematisiert den Motor 12 als Teil einer Motoranordnung 44, in welcher der Motor 12 eine Last 46 antreibt, z.B. ein Lüfterrad. An einem Widerstand 54 wird der Strom i' durch den Motor 12 erfasst und einem Regler 52 zugeführt, um diesen Strom i' beim Anlauf des Motors 12 zu begrenzen. Der Strom i' durch den Motor 12, welcher beim Anlauf infolge der internen Strombegrenzung der Anordnung 44 auftreten kann, wird bevorzugt niedriger eingestellt als der maximale Wert des Stromes i, der noch nicht zum Auslösen der elektronischen Sicherung 40 führt. Dadurch erreicht man, dass die elektronische Sicherung 40 nur bei einem Fehler anspricht.

Derartige Vorgänge (Strombegrenzung) werden heute häufig mittels eines PWM-Stellers durchgeführt, wodurch der Strom i' im Motor 12 die Form kurzer Impulse erhält, vgl. Fig. 3. Wenn der Motor 12 ein elektronisch kommutierter Motor ist, hat selbst ohne PWM-Steller der Strom i' durch den Motor die Form von niederfrequenten Impulsen, mit einer Frequenz im Bereich 25 bis 200 Hz. Derartige Impulse stören bei vielen Anwendungen, z.B. in Anlagen der Telekommunikation. Mit herkömmlichen Filtern ist es in der Praxis kaum möglich, derartige niederfrequente Störungen herauszufiltern, d.h. die Anforderungen der elektromagnetischen Verträglichkeit (EMV) sind für die niederen Frequenzen mit herkömmlichen Mitteln praktisch nicht zu erfüllen.

**Fig. 3** zeigt ein typisches Beispiel für einen Motorstrom i', der die Form von kurzen Impulsen mit relativ hoher Frequenz hat, denen sich eine niederfrequente Komponente überlagert, welche durch die Kommutierung des elektronisch kommutierten Motors 12 verursacht wird, wodurch der Strom i' an den Stellen 53 in regelmäßigen Abständen zu Null wird. Die niederfrequente Komponente hat gewöhnlich eine Frequenz im Bereich 25...200 Hz.

Bei der Erfindung geht man deshalb so vor, dass der Strom i durch den Stromregler 24, 30 auf einen konstanten Wert geregelt wird. An den Stellen 53, an denen der Motor 12 keinen oder nur einen sehr geringen Strom aufnimmt, wird der Kondensator 21 durch den Stromregler 24, 30 aufgeladen.

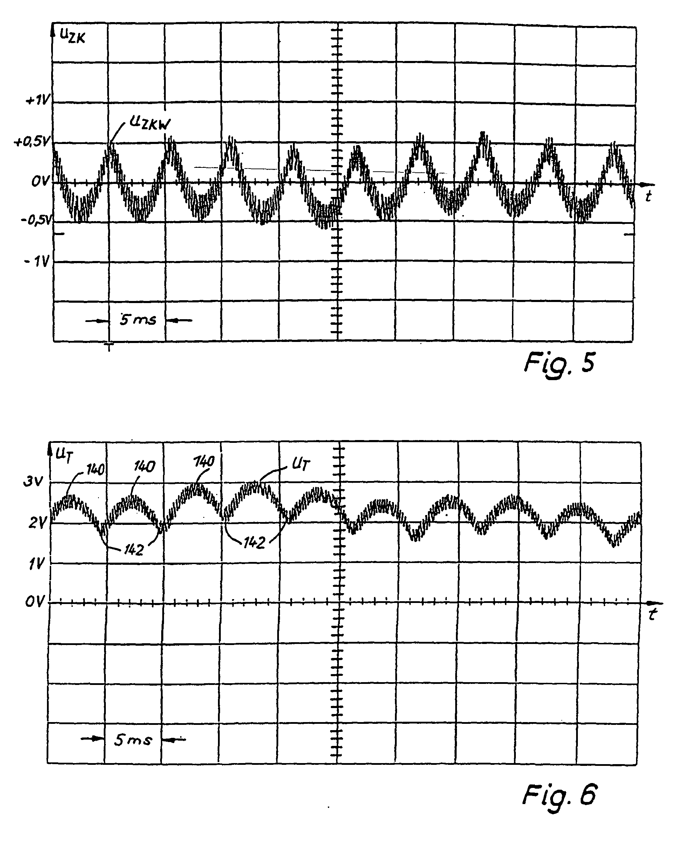

An den Stellen 55 (Fig. 3), wo der Motor 12 einen hohen Strom aufnimmt, wird der Motor teilweise über den Stromregler 24, 30 und teilweise aus dem Kondensator 21 gespeist. Die Folge ist, dass am Kondensator 21 eine wellige Gleichspannung entsteht, also eine Gleichspannung mit einer geringen überlagerten Wechselspannungskomponente. Diese Wechselspannungskomponente Uzkw ist in **Fig. 5** dargestellt. Ihr oberer Spitzenwert beträgt z.B. +0,5 V, und ihr unterer Spitzenwert -0,5 V. Besonders elektronisch kommutierte Gleichstrommotoren sind relativ unempfindlich gegenüber einer solchen überlagerten Wechselspannung.

**Fig. 4** zeigt den Strom i durch den Widerstand 26, der bei einer solchen Anordnung einen weitgehend konstanten Wert hat. In den Fig. 3 und 4 wird derselbe Maßstab für die Zeitachse t und für die Werte des Stromes i' bzw. i verwendet, und man erkennt die enorme Verbesserung, die sich durch die vorliegende Erfindung ergibt. In Fig. 4 beträgt z.B. der Strom i etwa 0,6 A, während im Motor 12 selbst Spitzenwerte des Stromes l' bis 2,7 A auftreten.

In bevorzugter Weise wird die Anordnung 10 bzw. 10' (Fig. 7) so ausgelegt, dass der Wechselspannungsanteil der Spannung $U_T$ etwa dem Wechselspannungsanteil uzkw der Spannung Uzk entspricht, z.B. 1 V. Dem letztgenannten Wert überlagert sich als sogenannter Offset der Spannungsabfall von etwa 1,5 V an den Halbleiterstrecken des Transistors 24, so dass $U_T$ z.B. zwischen 2 und 3 V schwankt, wie in Fig. 6 dargestellt. Ein solcher Wert von $U_T$ ist auch deshalb von Vorteil, weil der Strom zum Motor 12 kurzzeitig abnehmen kann, und in einem solchen Fall darf der Kondensator 21 nicht voll geladen sein, da er dann kurzzeitig den geregelten Strom i vom Stromregler 24, 30 aufnehmen muss. Man bezeichnet das als Regelreserve. Bei einem Lüfter kann z.B. durch einen Windstoß der Strombedarf kurzzeitig sinken, und ein Teil des geregelten Stromes fließt dann in den Kondensator 21, wodurch $U_{ZK}$ ansteigt und $U_T$ entsprechend absinkt.

Eine erfindungsgemäße Anordnung 10 bzw. 10' kann auch als aktives Filter bezeichnet werden, da sie aktiv Störimpulse ausfiltert, welche sonst auf den Zuleitungen 14, 16 auftreten würden.

Fig. 2 zeigt eine erste bevorzugte Ausführungsform der vorliegenden Erfindung. In der Minusleitung 16 befindet sich die Diode 19. Die Anordnung gemäß Fig. 2 oder 7 kann ggf. auch direkt in einen Motor 44 eingebaut werden, wenn besonders hohe Anforderungen an die elektromagnetische Verträglichkeit dieses Motors gestellt werden.

Von der Plusleitung 14 führt ein Widerstand 62 über einen Knotenpunkt 64 zu einer Zenerdiode 66, deren Anode mit der Minusleitung 16 verbunden ist. An den Knotenpunkt 64 ist die Basis eines npn-Transistors 68 angeschlossen, der als Emitterfolger geschaltet ist, so dass das Potenzial + Vss an seinem Emitter im wesentlichen dem Potenzial am Punkt 64 entspricht. Sein Kollektor ist über einen Widerstand 70 mit der Plusleitung 14 verbunden. Man erhält so am Emitter des Transistors 68 eine geregelte Gleichspannung, die u.a. zur Stromversorgung von drei Operationsverstärkern (OPV) 74, 76 und 78 dient, was nur für den OPV 78 dargestellt ist. Dieser ist also angeschlossen an das Potenzial + Vss, und an die Minusleitung 16, also an Potenziale von z.B. -36 V und -48 V, bezogen auf die Plusleitung 14 mit ihrem Potenzial von 0 V.

Das Gate G des N-Kanal-MOSFET 24 ist über einen Widerstand 80 mit dem Ausgang 79 des OPV 78 verbunden. Wenn dieser Ausgang hoch ist, leitet der Transistor 24, und wenn er niedrig ist, sperrt er. In dem Bereich zwischen hoch und niedrig wirkt der Transistor 24 wie ein variabler Widerstand, dessen Wert durch die Spannung am Gate G verändert werden kann. Man sagt, dass ein solcher Transistor "im linearen Betrieb arbeitet".

Die Source S des Transistors 24 ist über den Strommesswiderstand 26 mit der Minusleitung 16 verbunden, ferner über einen Widerstand 82 mit dem negativen Eingang des OPV 78, der seinerseits über einen Widerstand 84 und einen dazu parallelen Kondensator 86 mit dem Ausgang 79 verbunden ist.

Die Minusleitung 16 ist über einen Widerstand 88 und einen dazu parallelen Kondensator 90 mit dem positiven Eingang 32 des OPV 78 verbunden, dem über einen Widerstand 118 ein Strom-Sollwert vom Ausgang des OPV 76 zugeführt wird. Ferner ist an den positiven Eingang 32 der Kollektor eines npn-Transistors 92 angeschlossen, der Teil der elektronischen Sicherung 40 ist.

Der Ausgang des OPV 76 ist über einen Gegenkopplungswiderstand 122 mit dessen negativem Eingang verbunden, der über einen Widerstand 120 mit der Minusleitung 16 verbunden ist. Der positive Eingang des OPV 76 ist über einen Widerstand 116 und einen Knotenpunkt 114 mit der Leitung 22 verbunden, also mit der Zwischenkreisspannung UzK.

Der Emitter des Transistors 92 ist mit der Minusleitung 16 verbunden. Seine Basis ist über einen Widerstand 94 mit der Minusleitung 16 und über einen Widerstand 96 mit einem Knotenpunkt 98 verbunden, der seinerseits über einen Kondensator 100 mit der Minusleitung 16 und über einen Widerstand 102 mit dem Ausgang des als Komparator geschalteten OPV 74 verbunden ist.

Der Minuseingang 104 des Komparators 74 ist über einen Widerstand 106 mit der Minusleitung 16 und über einen Widerstand 108 mit der geregelten Spannung Vss verbunden. Der Minuseingang 104 liegt also auf einem konstanten Referenzpotenzial. Der Pluseingang 110 des Komparators 74 ist über einen Widerstand 112 mit dem Knotenpunkt 114 verbunden, der an die Zwischenkreisleitung 22 angeschlossen ist.

Der Kollektor des Transistors 92 ist, ebenso wie der Kollektor eines npn-Transistors 126, mit dem Knotenpunkt 32 verbunden. Der Emitter des Transistors 126 ist mit der Minusleitung 16 verbunden. Seine Basis ist über einen Widerstand 128 mit einem Knotenpunkt 130 verbunden, der seinerseits über einen Widerstand 132 mit der Minusleitung 16 und über eine Zenerdiode 134 mit der Plusleitung 14 verbunden ist.

**Arbeitsweise**

Die Begrenzung des Strom-Sollwerts, nämlich der Spannung $u_{32}$ am Widerstand 88, nach oben wird durch die Werte der Widerstände 118 und 88 eingestellt. Die maximale Ausgangsspannung des OPV 76 entspricht der Versorgungsspannung Vss (z.B. +12 V), die diesem OPV zugeführt wird. Über das Verhältnis der Widerstände 118 und 88 kann der obere Grenzwert des Strom-Sollwerts $U_{32}$ sehr exakt eingestellt werden, denn für ihn gilt

$$u_{32} = Vss * R88/(R118 + R88) \qquad \qquad ... (3)$$

Alternativ könnte man auch an Stelle des Widerstands 88 eine Zenerdiode verwenden, doch ist man damit auf bestimmte Spannungswerte festgelegt, und mit dem beschriebenen Spannungsteiler lässt sich der obere Grenzwert von $u_{32}$ wesentlich exakter einstellen.

Am Messwiderstand 26 tritt im Betrieb durch den Strom i ein Spannungsabfall U26 auf, und die Differenz ($u_{32}$ - $u_{26}$) wird vom OPV 78 verstärkt und durch den Kondensator 86 integriert. Durch die Integration ergibt sich am Ausgang 79 des OPV 78 ein Gleichspannungssignal, das über den Widerstand 80 den Feldeffekttransistor 24 linear ansteuert.

Wenn z.B. die Spannung $u_{26}$, welche als Strom-Istwertsignal dient, niedriger ist als die Spannung $u_{32}$, d.h. das Potenzial am positiven Eingang des OPV 78 ist höher als das Potenzial am negativen Eingang, wird die Gleichspannung am Ausgang des OPV 78 erhöht und der Transistor 24 wird stärker eingeschaltet, so dass der Strom i höher wird. Ist umgekehrt die Spannung $u_{26}$ größer als $u_{32}$, so wird der Strom i durch den Transistor 24 reduziert, so dass also dieser Strom i durch den Stromregler 30 auf einen konstanten Wert geregelt wird.

Der Stromregler 30 hat eine PT1-Charakteristik, d.h. die Charakteristik eines Proportionalreglers mit einem Zeitglied erster Ordnung. Der Verstärkungsfaktor beträgt

$$Kp = - R84/R82 \qquad \qquad ... (4),$$

und die Zeitkonstante T1 beträgt

$$T1 = R84*C86 \qquad \qquad ... (5)$$

**Zwischenkreisregler 34**

Über den Widerstand 116 wird die Spannung $U_T$ am Transistor 24 dem positiven Eingang des OPV 76 zugeführt und verstärkt. Auch hier handelt es sich um einen Proportionalregler mit einem Zeitglied erster Ordnung, also einen PT1-Regler. Sein Verstärkungsfaktor Kp beträgt

$$Kp = R122/R120 \qquad \qquad ... (6)$$

Während beim Stromregler 30 das Zeitglied 84, 86 als aktives Zeitglied in der Gegenkopplung vom Ausgang 79 zum negativen Eingang des OPV 78 realisiert ist, ist es beim Zwischenkreisregler 34 passiv am Ausgang des OPV 76 angeordnet (Widerstände 118, 88 und Kondensator 90). Dies hat den Vorteil, dass damit gleichzeitig etwaige Störungen von der Überspannungsabschaltung 38 und der Sicherungsfunktion 40 ausgefiltert werden.

Wenn wegen zunehmender Belastung des Motors 12 die Spannung $U_T$ ansteigt, also die Spannung $U_{ZK}$ abnimmt, erzeugt der OPV 76 an seinem Ausgang ein höheres Potenzial, d.h. der Sollwert u32 für den Stromregler 34 wird erhöht. In der bereits beschriebenen Weise ist dieser Sollwert durch das Verhältnis der Widerstände 118 und 88 nach oben begrenzt.

Wenn der Sollwert u32 hierdurch ansteigt, wird der Transistor 24 stärker leitend, so dass die Spannung $U_T$ wieder ab- und die Spannung UzK wieder zunimmt.

Da der Zwischenkreisregler 34 durch den Kondensator 90 (z.B. 3,3 elf) eine höhere Zeitkonstante hat als der Stromregler 30, reagiert er nur auf länger andauernde Änderungen von $U_T$ bzw.Uzk. Dies hat sich als vorteilhaft erwiesen, damit die beschriebene Anordnung nicht zu Schwingungen neigt, d.h. der Zwischenkreisregler 34 sollte nur langsam reagieren, um das gewünschte adaptive Verhalten sicherzustellen.

Dadurch, dass der Stromregler 30 direkt am Eingang der Versorgungsspannung $U_B$ wirkt, wird nicht nur der Startstrom des Motors 12 begrenzt, sondern auch der Einschalt-Stromstoß, der beim Einschalten durch das Aufladen des Kondensators 21 entsteht und der sonst große Werte erreichen könnte, z.B. 100 A.

## Sicherungsfunktion 40

Dem positiven Eingang des Komparators 74 wird über den Widerstand 112 die Spannung $U_T$ von der Leitung 22 zugeführt. Am negativen Eingang 104 liegt, wie bereits beschrieben, ein konstantes Potenzial, das durch das Verhältnis der Widerstände 106, 108 definiert ist.

Wird das Potenzial am positiven Eingang 110 höher als das Potenzial am negativen Eingang 104, so wird der Ausgang des Komparators 74 hoch, und der Kondensator 100 wird über den Widerstand 102 aufgeladen. Der Widerstand 102 und der Kondensator 100 bilden ein Zeitglied erster Ordnung, und dieses bestimmt die Zeit, die der Transistor 92 benötigt, um voll leitend zu werden, also die Zeit bis zum Ansprechen der Sicherungsfunktion, und deren Empfindlichkeit. Durch Dimensionierung des Widerstands 102 und des Kondensators 100 kann die Empfindlichkeit der Sicherungsfunktion 40 in der gewünschten Weise verändert werden.

Wenn der Transistor 92 leitend wird, reduziert er die Spannung u32, so dass der Transistor 24 weniger stark leitend wird. Sobald der Transistor 24 vollständig abgeschaltet ist, stellt sich am positiven Eingang des Komparators 74 ständig das Potenzial "hoch" ein, wodurch der Komparator 74 in die Selbsthaltung (latch) geht, und die Anordnung 10 wird dauernd abgeschaltet. Zum erneuten Einschalten muss die gesamte Anordnung 10 abgeschaltet und dann erneut eingeschaltet werden.

## Überspannungsschutz 38

Bei kurzzeitigen Spannungsspitzen der Spannung $U_B$ wird die Zenerdiode 134 leitend und macht den Transistor 126 leitend, so dass die Spannung $u_{32}$ entsprechend reduziert wird und der Transistor 24 weniger stark leitet. Dadurch wirken sich derartige Spannungsspitzen nicht auf den Motor 12 aus. Falls die Überspannung längere Zeit bestehenbleibt, tritt die Sicherungsfunktion 40 in Aktion und schaltet in der bereits beschriebenen Weise den Motor 12 ab.

**Fig. 5** zeigt den Verlauf des Wechselspannungsanteils der Spannung Uzk, die im Betrieb des Motors 12 am Kondensator 21 auftritt. Dieser (kleine) Wechselspannungsanteil überlagert sich der Gleichspannung am Motor 12. Er beträgt z.B. 2 % der Spannung Uztc.

**Fig. 6** zeigt den Verlauf der Spannung $U_T$. Diese fluktuiert ständig zwischen einem Maximalwert 140 und einem Minimalwert 142.

### Beispielhafte Werte für Fig. 2

| | |
|---|---|
| $U_B$ | ... 48 V (38...72 V) |
| Leistungsaufnahme des Motors 12 | ... 30 W (0...60 W) |
| Operationsverstärker 74, 76, 78 | ... LM2902D |
| Transistoren 92, 126 | ... BC846B |
| Transistor 68 | ... BST39 |
| Transistor 24 | ... IRF640 |
| Zenerdiode 66 | ... BZX284C12 |
| Zenerdiode 134 | ... BZD27C82 |
| Kondensator 21 | ... 470 µF |
| Kondensator 100 | ... 1 µF |
| Kondensator 90 | ... 3,3 µF |
| Kondensator 86 | ... 4,7 nF |
| Widerstände 62, 108, 112, 120, 122, 128 | ... 10 kΩ |
| Widerstand 70 | ... 1 kΩ |
| Widerstand 132 | ... 120 kΩ |
| Widerstand 94 | ... 11 kΩ |
| Widerstand 96 | ... 82 kΩ |
| Widerstände 102, 116 | ... 100 kΩ |
| Widerstand 106 | ...4,7kΩ |
| Widerstand 118 | ... 39 kΩ |
| Widerstand 78 | ... 7,5 kΩ |
| Widerstand 84 | ... 22 kΩ |
| Widerstand 82 | ... 4,7 kΩ |
| Widerstand 26 | ... 77 Ω |
| Widerstand 80 | ... 1 kΩ |

(fortgesetzt)

**Beispielhafte Werte für Fig. 2**

| | |
|---|---|
| Widerstand 88 | ... 5,1 kΩ |

**Fig. 7** zeigt eine Anordnung 10', bei der der Stromregler in der positiven Zuleitung 14 angeordnet ist, während die negative Zuleitung 16 als Referenzpotenzial dient und an Masse 17 angeschlossen ist. In Fig. 7 sind nur die Kernfunktionen explizit dargestellt. Die Schutzdiode 19' befindet sich hier in der positiven Zuleitung 14.

Ganz links befindet sich wieder die Batterie 15, z.B. 48 V, und daneben ein Netzteil 140, das an seinem Ausgang 141 eine Spannung Vss erzeugt, die z.B. um 12 V niedriger ist als das Potenzial der Plusleitung 14. Hinsichtlich der Wirkungsweise des Netzteils wird auf die Beschreibung zu den Teilen 62, 66, 68, 70 der Fig. 2 verwiesen.

Rechts neben dem Netzteil 140 befindet sich ein Zwischenkreisregler 144, und rechts neben diesem ein Stromregler 146. Der Motor ist wieder mit 12, der Zwischenkreiskondensator mit 21 bezeichnet.

Mit dem Motor 12 ist über einen Knotenpunkt 149 ein P-Kanal-Feldeffekttransistor 150 verbunden, dessen Drain D mit einem Knotenpunkt 149 und dessen Source S über einen Knotenpunkt 151 und einen Messwiderstand 152 mit der Plusleitung 14 verbunden ist. Am Messwiderstand 152 entsteht im Betrieb durch den Strom i ein Spannungsabfall u152, und dieser wird vom Stromregler 146 auf einen Wert geregelt, der einem Sollwert u188 entspricht, welcher dem Stromregler 146 vom Zwischenkreisregler 144 vorgegeben wird. Der Zwischenkreisregler 144 erzeugt diesen Sollwert abhängig von der Größe von (u152 + $U_T$), d.h. wenn dieser Wert ansteigt, weil die Spannung Uzk am Motor 12 abfällt, wird der Sollwert für den Stromregler 146 erhöht, und wenn diese Spannung fällt, wird der Sollwert u188 reduziert. Auf diese Weise erhält man eine adaptive Regelung, d. h. der Stromregler 146 passt sich adaptiv, also nur langsam, dem Leistungsbedarf des Motors 12 an.

Die Anordnung 10' verwendet zwei OPV 160, 162, die zur Spannungsversorgung in der dargestellten Weise mit der Plusleitung 14 und dem Ausgang 141 des Netzteils 140 verbunden sind und folglich an einer Betriebsspannung von z.B. 12 V liegen, nämlich an Potenzialen von +48 V (Leitung 14) und +36 V (Leitung 141).

Der Ausgang 163 des OPV 162 ist über einen Widerstand 166 mit dem Gate G des Transistors 150 verbunden. Er ist ferner über einen Widerstand 168 mit dem Minuseingang 172 des OPV 162 verbunden. Zum Widerstand 168 ist ein Kondensator 170 parallel geschaltet, und diese bilden zusammen ein aktives Zeitglied in Form einer Gegenkopplung für den OPV 162. Der Minuseingang 172 ist ferner über einen Widerstand 174 mit dem Knotenpunkt 151 und über einen Widerstand 176 mit der Leitung 141 (Vss) verbunden. Außerdem ist an den Eingang 172 ein Zeitglied 175 angeschlossen, das in Fig. 8 dargestellt ist und das die Aufgabe hat, den Transistor 150 so lange zu blockieren, bis sich ein Kondensator 177 des Netzgeräts 140 auf seine Betriebsspannung aufgeladen hat. Ohne das Zeitglied 175 würde der Transistor 150 direkt nach dem Einschalten der Anordnung 10' voll leitend werden, was einen hohen Ladestrom zum Kondensator 21 zur Folge hätte.

Wenn der Strom i zunimmt, wird die Spannung u152 größer, und das Potenzial des Punktes 151 wird deshalb negativer. Dadurch wird auch der Minuseingang 172 negativer, abhängig vom Spannungsteilerverhältnis der Widerstände 174 und 176. Auf diese Weise wirkt also der Istwert u152 auf den Minuseingang 172 des Operationsverstärkers 162.

Der positive Eingang 180 des OPV 162 ist über einen Widerstand 182 mit der Plusleitung 14, über einen Widerstand 184 mit dem Ausgang 186 des OPV 160, und über einen Widerstand 188 und einen dazu parallelgeschalteten Kondensator 190 mit der Leitung 141 verbunden. Der Kondensator 190 und der Widerstand 188 bilden ein Zeitglied für den Regler 144. Ferner kann an den Eingang 180 eine Funktionseinheit 192 angeschlossen werden, z.B. eine elektronische Sicherung (40 in Fig. 1) oder ein Überspannungsschutz (38 in Fig. 1).

Der Ausgang 186 des OPV 160 ist über einen Gegenkopplungswiderstand 194 mit dessen Minuseingang 196 verbunden, der seinerseits über einen Widerstand 198 mit einem Knotenpunkt 200 verbunden ist, der über einen Widerstand 202 mit der Plusleitung 14 und über einen Widerstand 204 mit der Leitung 141 verbunden ist. Der Punkt 200 hat ein konstantes Potenzial, so dass der Minuseingang 196 auf einem Referenzpotenzial liegt.

Der Pluseingang 206 des OPV 160 ist über einen Widerstand 208 mit der Leitung 141 und über einen Widerstand 210 mit dem Knotenpunkt 149 verbunden. Hierdurch wird dem Eingang 206 die Spannung am Zwischenkreis des Motors 12 zugeführt.

Die Widerstände 184, 188 bestimmen durch ihr Verhältnis den Maximalwert der Spannung u188, welche dem Eingang 180 des Stromreglers 146 als Sollwert zugeführt wird. Der Ausgang 186 des OPV 160 kann nämlich maximal das Potenzial der Plusleitung 14 haben, und minimal das Potenzial der Leitung 141, und im ersteren Fall beträgt die Spannung

$$u188 = Vss*R188/R184+R188) \qquad ... (7)$$

Dies legt den maximalen Wert des Stromes i fest.

Die Spannung u188 wird dem Eingang 180 des OPV 162 zugeführt, und wenn der Eingang 180 ein positiveres Potenzial hat als der Eingang 172, wird der Strom im Transistor 150 so lange reduziert, bis das Potenzial am Eingang 172 im wesentlichen dem Potenzial am Eingang 180 entspricht.

Ist umgekehrt das Potenzial am Eingang 180 negativer als das Potenzial am Eingang 172, so wird der Strom im Transistor 150 so lange erhöht, bis das Potenzial am Eingang 172 dem Potenzial am Eingang 180 im wesentlichen entspricht.

Sollwert u188 und Istwert u152 wirken also auf verschiedene Eingänge des OPV 162.

Nimmt infolge Belastung die Drehzahl des Motors 12 ab, so sinkt die Spannung $U_{ZK}$, und die Spannung $U_T$ steigt entsprechend. Das Potenzial am Knotenpunkt 149 wird über den Widerstand 210 dem Eingang 206 des OPV 160 zugeführt, und die Potenzialdifferenz zwischen den Eingängen 196, 206 nimmt hierdurch zu, wodurch der Ausgang 186 positiver wird und u188 ansteigt. Dies hat zur Folge, dass der Strom i durch den Transistor 150 in der bereits beschriebenen Weise erhöht wird, wodurch $U_{ZK}$ wieder ansteigt.

Beide Regler 144 und 146 sind also Proportional regler mit einem Zeitglied erster Ordnung, sogenannte PT1-Regler, wobei aber die Zeitkonstante des Reglers 144 größer ist als die des Reglers 146, da der Regler 144 nur langsam reagieren soll, der Regler 146 dagegen sehr schnell.

**Fig. 8** zeigt den Aufbau des bei Fig. 7 verwendeten Zeitglieds 175, welches während einer vorgegebenen Zeitspanne nach dem Einschalten den Transistor 150 solange sperrt, bis die Anordnung 10' voll aktiviert ist. Bei der Anordnung 10 nach Fig. 2 ist ein solches Zeitglied nicht unbedingt erforderlich.

Zwischen einem Knotenpunkt 222 und der Plusleitung 14 ist ein Kondensator 220 angeordnet. Vom Knotenpunkt 222 führt ein Widerstand 224 zur Leitung 141 und ein Widerstand 226 zur Basis eine pnp-Transistors 28, die über einen Widerstand 230 mit der Plusleitung 14 verbunden ist, an die auch der Emitter des Transistors 228 angeschlossen ist. Sein Kollektor ist über einen Widerstand 232 mit der Leitung 141 und über einen Widerstand 234 mit der Basis eines pnp-Transistors 236 verbunden, die über einen Widerstand 238 mit der Plusleitung 14 verbunden ist, an die auch der Emitter des Transistors 236 angeschlossen ist. Sein Kollektor ist mit dem Anschluss 172 des OPV 162 verbunden.

Beim Einschalten stellt der entladene Kondensator 220 einen Kurzschluss für die Widerstände 226, 230 dar, so dass der Transistor 228 zunächst gesperrt bleibt. Wenn sich der Kondensator 220 auf eine vorgegebene Spannung aufgeladen hat, genügt dies, um den Transistor 228 leitend zu machen. Dadurch bildet dieser einen Kurzschluss für die Widerstände 234, 238, so dass der bisher leitende Transistor 236 jetzt gesperrt wird.

Solange der Transistor 236 leitend ist, erhält der negative Eingang 172 des OPV 162 das Potential der Plusleitung 162, wodurch der Transistor 150 gesperrt wird. Wenn der Transistor 236 nicht leitend wird, hat er keinen Einfluss mehr auf den Stromregler 146, und dieser arbeitet dann normal und begrenzt auch den Ladestrom des Kondensators 21, welcher beim Einschalten auftritt und ohne eine solche Begrenzung sehr hohe Werte annehmen könnte.

**Beispielhafte Werte der Bauelemente in Fig. 7 und 8**

| | |
|---|---|
| **UB** | ... 48 V (38...72 V) |
| Leistungsaufnahme des Motors 12 | ... 30 W (0...60 W) |
| OPV 160, 162 | ... LM324 |
| Transistor 150 | ... IRF9130 |
| Transistoren 228, 236 | ... BC558A |
| Kondensator 21 | ... 1000 μF |
| Widerstand 152 | ...0,33 Ω |
| Widerstände 202, 204, 224,232,234,238 | ... 10 kΩ |
| Widerstand 194 | ...11kΩ |
| Widerstand 174 | ...4,7kΩ |
| Widerstand 168 | ...16Ω |
| Widerstand 166 | ... 1 kΩ |
| Widerstand 176 | ... 13 kΩ |
| Widerstand 182 | ...54kΩ |
| Widerstand 188 | ... 130 kΩ |
| Widerstand 184 | ... 82 kΩ |
| Widerstand 208 | ... 560 kΩ |
| Widerstand 210 | ...100kΩ |
| Widerstand 226 | ... 6,8 kl |
| Widerstand 230 | ... 2,2 kΩ |

**Beispielhafte Werte der Bauelemente in Fig. 7 und 8**

| | |
|---|---|
| Kondensator 170 | ... 4,7 nF |
| Kondensatoren 177, 190 | ... 3,3 $\mu$F |
| Kondensator 220 | ... 2 $\mu$F |

Durch eine erfindungsgemäße Anordnung können sich u.a. folgende Vorteile ergeben:

- Der geregelte Strom i ist abhängig von der Belastung des Motors 12 (adaptive Charakteristik des Reglers).
- Die Stromregelung erfolgt bevorzugt mit einem MOSFET, der als variabler Widerstand betrieben wird ("lineare Regelung").
- Die Spannung $U_{ZK}$ am Zwischenkreis wird bevorzugt nicht direkt erfasst, sondern indirekt über die Spannung $U_T$ am Transistor 24 bzw. 150. Dies ist möglich, weil die Spannung $U_R$ bei dieser Betriebsart weitgehend konstant ist, und weil der Transistor 24 bzw. 150 linear geregelt wird.
- Der maximale Sollwert des Stromreglers 30 (an dessen Eingang 32) bzw. 147 (an dessen Eingang 180) wird auf einen vorgegebenen Wert begrenzt. Das kann bei einem Motor dazu verwendet werden, den Startstrom zu begrenzen. Ebenso wird hierdurch der Einschaltstrom begrenzt, der durch das Aufladen des Kondensators 21 entsteht und sonst sehr hohe Werte erreichen könnte.
- Bei Auftreten eines Fehlers, z.B. bei einem Kurzschluss, ist die im vorhergehenden Punkt erwähnte Strombegrenzung längere Zeit aktiv. Um eine Überlastung des MOSFET 24 bzw. 150 zu vermeiden, wird dieser dann nach Ablauf einer vorgegebenen Zeit vollständig abgeschaltet. Durch Abschalten der Versorgungsspannung kann die Anordnung 10 bzw. 10' erneut aktiviert werden.
- Beim Auftreten von Spannungsspitzen wird die Spannung UzK am Motor 12 über den linear geregelten MOSFET 24 bzw. 150 begrenzt.
- Das beschriebene Prinzip eines aktiven EMV-Filters kann sowohl in der negativen Leitung 16 wie in der positiven Leitung 14 der Versorgungsspannung $U_B$ verwendet werden. Die Fig. 1 und 2 zeigen ein Beispiel für ein aktives Filter in der negativen Leitung, die Fig. 7 und 8 ein Beispiel für ein aktives Filter in der positiven Zuleitung 14.
- Weil bei der Erfindung zur Filterung des Stromes keine Induktivitäten oder sonstigen konventionellen Filterelemente benötigt werden, können bei Fig. 2 bezogen auf die Zuleitung 14 Steuersignale für den Motor 12 übertragen werden, ebenso bei Fig. 7 bezogen auf die Zuleitung 16

**Fig. 9** zeigt stark schematisiert die Übertragung eines Steuersignals Us bei einer Anordnung analog Fig. 7 und 8, bei der sich das aktive Filter 10' in der Plusleitung 14 befindet. Der Motoranordnung 44 soll über eine Leitung 246 das Signal $U_S$ zugeführt werden, das zwischen 0 und 10 V variabel ist, z.B. ein Sollwert für die Strombegrenzung des Motors 12. Dieses Signal $U_S$ kann in sehr vorteilhafter Weise direkt auf die Minusleitung 16 bezogen werden, die mit Masse 17 verbunden ist. (Bei Fig. 1 würde man $U_S$ auf die Leitung 14 beziehen.)

Deshalb sind zur Signalübertragung keine Optokoppler oder potenzialfreien Differenzverstärker notwendig, was den Aufwand für eine solche Signalübertragung, z.B. auch die Übertragung von Fehlersignalen vom Motor 12 zu einer zentralen Überwachung, reduziert.

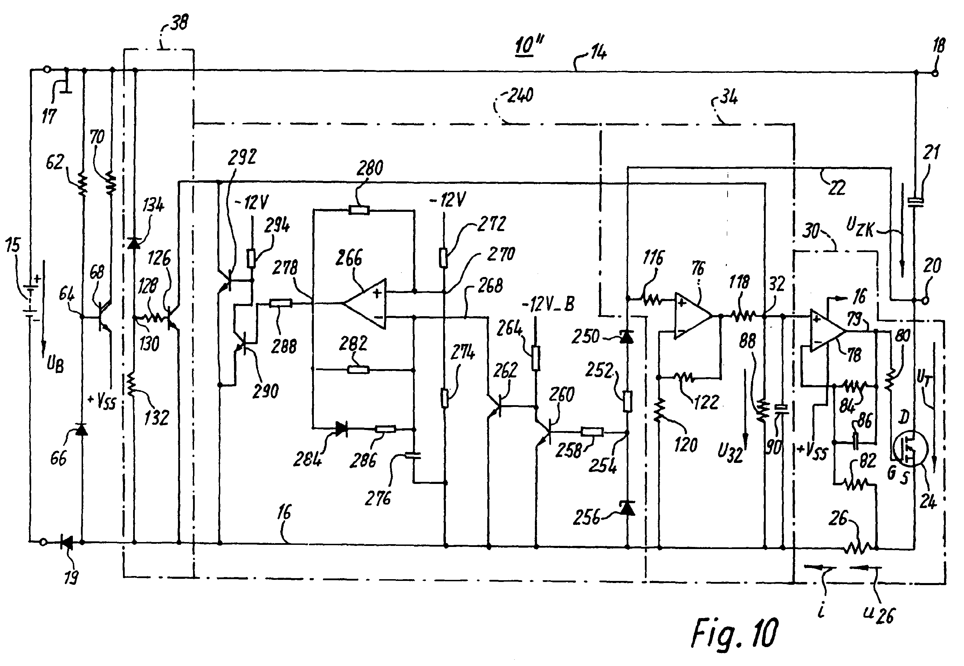

**Fig. 10** zeigt eine Variante 10" zu Fig. 2. Diese verwendet eine elektronische Sicherung 240, die ähnlich aufgebaut ist wie die Sicherung 40 der Fig. 2, d.h. wenn die Spannung UT am MOSFET 24 zu hoch wird, löst die Sicherung 240 aus und schaltet den MOSFET 24 ab. Im Gegensatz zu Fig. 2 hat jedoch die Sicherung 240 eine automatische Resetfunktion, d.h. beim Ausführungsbeispiel wird die Sicherung nach ca. 6 Sekunden automatisch zurückgesetzt. Anschließend wird während ca. 0,1 Sekunden geprüft, ob die Spannung UT immer noch zu hoch ist, und falls ja, wird erneut abgeschaltet und nach ca. 6 Sekunden ein neuer Einschaltversuch gemacht. Wenn die Sicherung 240 durch eine Störung unbeabsichtigt ausgelöst wurde, vermeidet man so, dass die Abschaltung permanent ist.

In Fig. 10 werden für gleiche oder gleichwirkende Teile wie in Fig. 2 dieselben Bezugszeichen verwendet, und diese Teile werden nicht nochmals beschrieben.

Der Knotenpunkt 114 ist mit der Katode einer Zenerdiode 250 verbunden, deren Anode über einen Widerstand 252 mit einem Knotenpunkt 254 verbunden ist. Dieser ist mit der Katode einer Zenerdiode 256 verbunden, deren Anode an der Minusleitung 16 liegt. Über einen Widerstand 258 ist der Knotenpunkt 254 mit der Basis eines npn-Transistors 260 verbunden, dessen Emitter an die Minusleitung 16 angeschlossen ist und dessen Kollektor mit der Basis eines npn-Transistors 262 und, über einen Widerstand 264, mit + 12 V (Vss) verbunden ist.

Der Kollektor des Transistors 262 ist mit dem negativen Eingang 268 eines Operationsverstärkers OPV 266 verbunden, der ebenfalls an die geregelte Spannung Vss von z.B. +12 V angeschlossen ist. Sein positiver Eingang 270 ist über einen Widerstand 272 mit + 12 V und über einen Widerstand 274 mit der Minusleitung 16 verbunden. Zwischen dem negativen Eingang 268 und der Minusleitung 16 liegt ein Kondensator 276. Der Ausgang 278 des OPV 266 ist über einen Widerstand 280 mit dem positiven Eingang 270 und über einen Widerstand 282 mit dem negativen Eingang 268 verbunden, ferner mit der Anode einer Diode 284, deren Katode über einen Widerstand 286 mit dem Eingang 268 verbunden ist.

Über einen Widerstand 288 ist der Ausgang 278 mit der Basis eines npn-Transistors 290 verbunden, dessen Emitter, ebenso wie der Emitter eines npn-Transistors 292, mit der Minusleitung 16 verbunden ist. Der Kollektor des Transistors 290 ist direkt mit der Basis des Transistors 292 und, über einen Widerstand 294, mit + 12 V verbunden. Der Kollektor des Transistors 292 ist mit dem-Knotenpunkt-32-verbunden, d.h. wenn der Transistor 292 leitet, erhält der Punkt 232 ein sehr niedriges Potenzial, wodurch der Stromregler 30 gesperrt wird.

## Arbeitsweise von Fig. 10

Zur Arbeitsweise des Stromreglers 30, des Zwischenkreisreglers 34 und der Überspannungssicherung 38 wird auf die Beschreibung zu Fig. 2 verwiesen.

## Sicherung 240 mit automatischem Reset

Wenn die Spannung $U_T$ über einen durch die Zenerdioden 250, 256 bestimmten Wert hinaus ansteigt, wird der Transistor 260 eingeschaltet, wodurch der Transistor 262 abgeschaltet wird. Letzterer hatte bisher den Kondensator 276 entladen, und deshalb lädt sich jetzt der Kondensator 276 über die Diode 284 und den Widerstand 286 auf, da der Ausgang des OPV 266 hoch ist.

Wenn die Spannung am Kondensator 276 die Schwellenspannung am positiven Eingang 270 erreicht, schaltet der Ausgang 278 auf niedrig, wodurch diese Schwellenspannung reduziert wird. Der Kondensator 276 wird nun über den hochohmigen Widerstand 282 so lange entladen, bis die Spannung am Kondensator 276 unter die (reduzierte) Schwellenspannung am positiven Eingang 270 gesunken ist.

Beim Laden des Kondensators 276 liegt der linke Anschluss des Widerstands 280 auf + 12 V und erhöht dadurch die Schwellenspannung am positiven Eingang 270.

Beim Entladen des Kondensators 276 liegt der linke Eingang des Widerstands 280 etwa auf 0 V, so dass der Widerstand 280 zum Widerstand 274 parallel geschaltet wird und folglich die Schwellenspannung am positiven Eingang 270 sinkt. Dies bewirkt eine Schalthysterese.

Wenn der Ausgang 278 des OPV 266 niedrig ist, wird der Transistor 290 aus- und der Transistor 292 eingeschaltet. Der eingeschaltete Transistor 292 macht den Sollwert U32 des Stromreglers 30 am Knotenpunkt 32 zu Null, und folglich wird der MOSFET 24 abgeschaltet.

Diese Abschaltung erfolgt also nach einer kurzen Verzögerung durch das Laden des Kondensators 276, z.B. nach 100 ms.

Nach dem Entladen des Kondensators 276 über den Widerstand 282 wird der Ausgang 278 wieder hoch, der Transistor 290 leitet, und der Transistor 292 sperrt, so dass der Stromregler 30 wieder aktiviert wird. Wenn der Strom i nach wie vor zu hoch ist, wird der MOSFET 24 nach etwa 100 ms erneut in der bereits beschriebenen Weise abgeschaltet. Sofern der Strom i nach dem Einschalten wieder normal ist, bleibt der Stromregler 30 eingeschaltet, weil die Zenerdioden 250, 256 in diesem Fall wieder sperren, so dass der Transistor 260 sperrt und der Transistor 262 leitet und den Kondensator 276 entlädt.

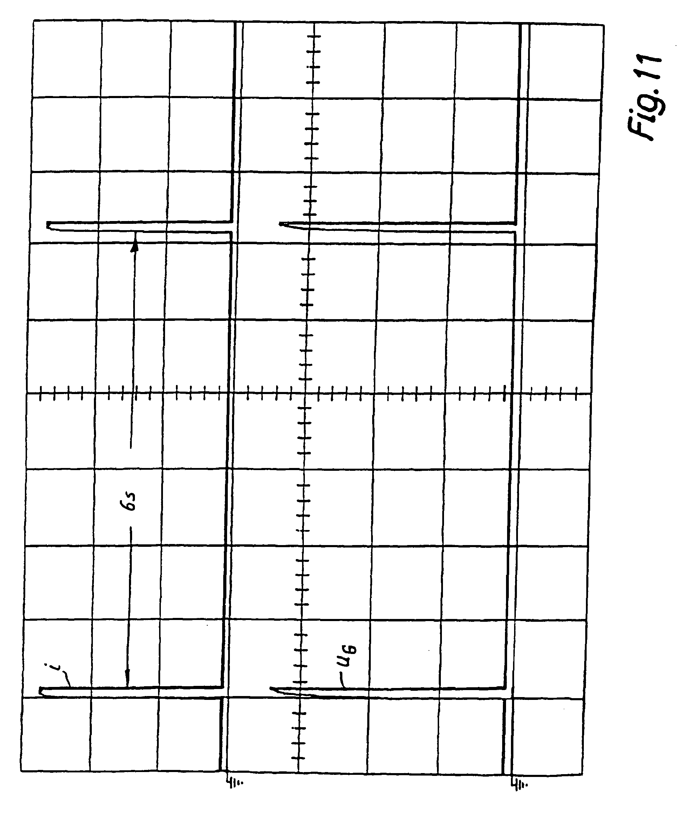

**Fig. 11** zeigt ein Oszillogramm für den Fall, dass bei Fig. 10 die Anschlüsse 18 und 20 kurzgeschlossen werden. Jeweils nach 6 Sekunden wird der MOSFET 24 kurzzeitig eingeschaltet, so dass in ihm während 0,1 Sekunden ein Strom i fließt. Die Spannung $u_G$ am Gate des MOSFET 24 ist in Fig. 11 unten dargestellt. Während des Einschaltens wird sie nur kurzzeitig hoch, sofern weiterhin ein Kurzschluss zwischen den Anschlüssen 18 und 20 vorhanden ist.

Bevorzugte Werte für die Bauelemente der elektronischen Sicherung 240

| | |
|---|---|
| Zenerdiode 250 | ... BZX284C6V2 |
| Zenerdiode 252 | ... BZX284C3V9 |
| Widerstand 252 | ... 33 kΩ |
| Widerstand 258 | ... 1 kΩ |
| Transistoren 260, 262, 290, 292 | ... BC846B |
| Widerstände 264, 274, 288, 294 | ... 22 kΩ |
| Widerstand 272 | ... 330 kΩ |
| Kondensator 276 | ... 3,3 μF |
| Widerstand 286 | ... 100 kΩ |

(fortgesetzt)

Bevorzugte Werte für die Bauelemente der elektronischen Sicherung 240

| | |
|---|---|
| Diode 284 | ... BAS216 |
| Widerstand 282 | ... 820 kΩ |
| OPV 266 | ... LM29020 |
| Widerstand 280 | ... 43 kΩ |

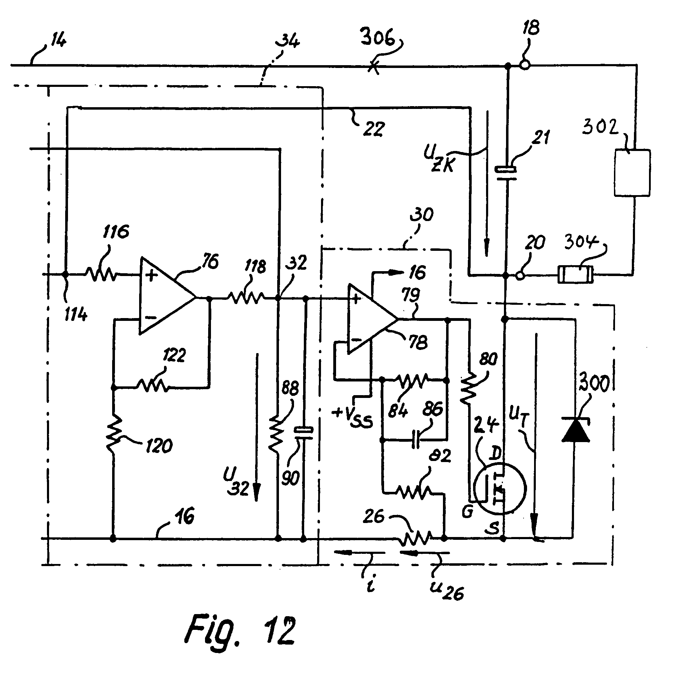

**Fig. 12** zeigt eine Variante zu Fig. 2 oder 10. Von-diesen beiden Figuren ist deshalb nur der rechte Teil dargestellt.

In Fig. 12 ist zum MOSFET 24 eine Zenerdiode 300 parallelgeschaltet. In diesem Fall sollte ein Verbraucher 302, z.B. ein Lüfter, über eine Schmelzsicherung 304 an die Anschlüsse 18, 20 angeschlossen werden. Alternativ kann diese Schmelzsicherung z.B. an einer Stelle 306 in der Zuleitung 14 angeordnet werden.

Wenn zwischen den Leitungen 14 und 16 eine Gleichspannung von 48 V liegt, kann die Zenerdiode 300 z.B. für 28 V ausgelegt werden, also für etwa die Hälfte der Betriebsspannung.

Bei einem Defekt des MOSFET 24 muss man zwei Fälle unterscheiden:

a) Kurzschluss im MOSFET 24. In diesem Fall funktioniert der Lüfter 302 weiterhin, jedoch ohne Stromregelung.

b) Der MOSFET 24 ist nichtleitend. In diesem Fall würde der Lüfter 302 stehenbleiben, und das betreffende Gerät würde nicht mehr gekühlt werden.

In dieser Situation wird die Zenerdiode 300 leitend und versorgt den Lüfter 302 weiterhin mit einem - reduzierten - Strom. Bei einer Gleichspannung von 48 V und einer Zenerspannung von 28 V erhält der Lüfter 302 eine reduzierte Spannung von 20 V, so dass er weiterhin läuft, aber mit reduzierter Drehzahl. Die Zenerdiode 300 muss für die entsprechende Leistung ausgewählt werden und benötigt gewöhnlich einen Kühlkörper.

Da in diesem Fall die elektronische Sicherung 40 bzw. 240 nicht mehr wirksam ist, wird die zusätzliche Schmelzsicherung 304 in Serie mit dem Lüfter 302 vorgesehen. Wird die Schmelzsicherung an der Stelle 306 angeordnet, so schützt sie generell gegen einen Kurzschluss zwischen den Punkten 18 und 20.

Selbstverständlich kann die Anordnung mit einer Zenerdiode auch bei Fig. 7 verwendet werden. In diesem Fall wird die Zenerdiode zwischen den Punkten 151 und 149 angeordnet. Diese Variante ist nicht explizit dargestellt.

Naturgemäß sind im Rahmen der vorliegenden Erfindung vielfache Abwandlungen und Modifikationen möglich. Bestimmte Zusatzfunktionen, die im Zusammenhang mit den Ausführungsbeispielen beschrieben wurden, können ggf. auch entfallen, z.B. der Überspannungsschutz oder die elektronische Sicherung, wenn dies vom Kunden nicht gewünscht wird. Alternativ sind auch weitere Zusatzfunktionen möglich, wenn der Kunde das wünscht, z.B. ein akustischer oder visueller Alarm bei Überstrom oder bei Auslösen der Sicherungsfunktion.

**Patentansprüche**

1. Anordnung zur Speisung eines Gleichstrommotors (12) aus einem Gleichstromnetz (U$_B$), welche Anordnung aufweist:

Einen Glelchstrom-Zwlschenkreiss (14, 22; 16, 141), an den dieser Gleichstrommotor (12) anschließbar Ist und dem ein Kondensator (21) zugeordnet ist, der geeignet ist, den Gleichstrommotor (12) kurzzeitig mit Energie zu versorgen; einen ersten Stromregler (30; 146) zum Anschließen des Gleichstrom-Zwischenkreises (14, 22; 16, 141) an das Gleichstromnetz (U$_B$), um dem dem Zwischenkrels zugeordneten Kondensator (21) und dem Gleichstrommotor (12) über einen als lineares Stellglied betriebenen Stelltransistor (24) einen Im wesentlichen konstanten Strom (i) zuzuführen, wobei an diesem Stelltransistor ein Spannungsabfall (U$_T$) auftritt; einen zweiten Regler (34; 144) zum Liefern eines Sollwerts (u$_{32}$, u$_{188}$) für den ersten Stromregler. (30; 146), welchem zweiten Regler (34; 144) als Istwert eine Spannung zuführbar ist, die im wesentlichen dem Spannungsabfall (U$_T$) an dem als lineares Stellglied betriebenen Stelltransistor (24) entspricht oder diesem Spannungsabfall etwa proportional ist, um mittels des zweiten Reglers (34; 144) den Sollwert (u32, u188) des ersten Stromreglers (30; 146) an unterschiedliche Belastungen des Gleichstrommotors (12) anzupassen.

2. Anordnung nach Anspruch 1, bei welcher dem zweiten Regler (34; 144) als Istwert eine Spannung zuführbar ist, welche von den Spannung (Vzk) am Gleichstrommotor (12) beeinflusst ist.

3. Anordnung nach Anspruch 1 oder 2, bei welcher der Spannungsabfall ($U_T$) am Stelltransistor (30; 146) etwa dem Wechselspannungsanteil der Spannung am Zwischenkreis (10, 22; 16, 141) entspricht.

4. Anordnung nach einem der Ansprüche 1 bis 3, bei welcher der Sollwert ($u_{32}$; $u_{188}$) für den Stromregler (30; 146) auf einen Maximalwert begrenzt wird.

5. Anordnung nach einem der Ansprüche 1 bis 4, bei welcher der zweite Regler (34; 144) als Proportionalregler mit einem Zeitglied erster Ordnung ausgebildet ist.

6. Anordnung nach Anspruch 5, bei welcher der zweite Regler (34; 144) eine größere Zeitkonstante (T1) aufweist als der Stromregler (30; 146).

7. Anordnung nach einem der vorhergehenden Ansprüche, bei welcher das Stellglied des Stromreglers (30; 146) als MOSFET-Transistor (24; 150) ausgebildet ist, der im linearen Betrieb betrieben wird.

8. Anordnung nach Anspruch 7, bei welcher der Spannungsabfall ($U_T$) an dem MOSFET-Transistor (24; 150) über den zweiten Regler (30; 146) den Sollwert ($u_{32}$; $u_{188}$) des Stromreglers (30:146) beeinflusst.

9. Anordnung nach Anspruch 8, bei welcher der Spannungsabfall ($U_T$) an dem MOSFET-Transistor (24; 150) Im wesentlichen dem Wechselspannungsanteil der Spannung (UZK) am Zwischenkreis (14, 22; 16, 141) entspricht.

10. Anordnung nach einem oder mehreren der vorhergehenden Ansprüche, bei welcher eine Anordnung (38) vorgesehen ist, weiche im Betrieb von der Spannung (UB) des Glelchstromnetzes gesteuert wird und bei Auftreten einer Überspannung den Strom (1) durch den Stromreglers (30; 146) reduziert.

11. Anordnung nach einem oder mehreren der vorhergehenden Ansprüche, bei welcher eine elektronische Sicherung (40) vorgesehen Ist, weiche abhängig von der Spannung an einem Stellglied (24) des Stromreglers (30) eine Abschaltung der Anordnung (10) bewirkt, wenn diese Spannung Ober einen vorgegebenen Wert hinaus ansteigt.

12. Anordnung nach Anspruch 11, bei welcher der elektronischen Sicherung (240) eine automatische Rückstellvorrichtung (260, 262, 276, 282. 284, 286) zugeordnet ist, welche In einem vorgegebenen zeitlichen Abstand nach einer Deaktivierung eine neue Aktivierung des Stromreglers (30) bewirkt.

13. Anordnung nach einem oder mehreren der vorhergehenden Ansprüche, bei welcher eine Zeitverzögerungsschaltung (Fig. 8) vorgesehen ist, welche den Stromregler (146) während einer vorgegebenen Zeitspanne nach dem Einschalten deaktiviert.

14. Anordnung nach einem oder mehreren der vorhergehenden Ansprüche, bei welcher parallel zum Stellglied (24) des Stromreglers (30) eine Zenerdiode (300) angeordnet ist, welche leitend wird, wenn dieses Stellglied (24) durch einen Defekt dauernd nicht leitend wird,
und dann die Stromversorgung eines angeschlossenen Verbrauchers (302) übernimmt.

15. Anordnung nach einem der vorhergehenden Ansprüche, bei welcher der Gleichstrommotor als kollektorloser Gleichstrommotor (12) ausgebildet ist.

16. Anordnung nach einem der vorhergehenden Ansprüche, bei welchem eine der Zuleitungen des Gielchstromnetzes (UB) zur Signalübertragung zu oder von einem angeschlossenen Gleichstrommotor (44) dient.

17. Anordnung nach einem der vorhergehenden Ansprüche, bei welcher dem angeschlossenen Gleichstrommotor (12) ein eigener Regler (52) zugeordnet ist.


**Claims**

1. Arrangement for supplying a d.c. motor (12) from a d.c. system ($U_B$), which arrangement has:

A d.c. intermediate circuit (14, 22; 16, 141), to which this d.c. motor (12) can be connected and to which a capacitor (21) is assigned, which is suitable for providing the d.c. motor (12) temporarily with energy; a first current regulator (30; 146) for connection of the d.c. intermediate circuit (14, 22; 16, 141) to the d.c. system ($U_B$), in order to supply a substantially constant current (i) to the capacitor (21) assigned to the intermediate circuit and to the d.c. motor (12) via an actuating transistor (24) operated as a linear actuating element, wherein a voltage drop ($U_T$) occurs at this actuating transistor; a second regulator (34; 144) for supplying a target value ($u_{32}$, $u_{188}$) for the first current regulator (30; 146), to which second regulator (34; 144) a voltage can be supplied as an actual value, which voltage corresponds substantially to the voltage drop ($U_T$) at the actuating transistor (24) operated as a linear actuating element or is roughly proportional to this voltage drop, in order to adjust the target value ($u_{32}$, $u_{188}$) of the first current regulator (30; 146) to different loads of the d.c. motor (12) by means of the second regulator (34; 144).

2. Arrangement according to claim 1, in which a voltage, which is influenced by the voltage ($U_{ZK}$) at the d.c. motor (12), can be supplied to the second regulator (34; 144) as an actual value.

3. Arrangement according to claim 1 or 2, in which the voltage drop ($U_T$) at the actuating transistor (30; 146) corresponds roughly to the alternating voltage portion of the voltage at the intermediate circuit (10, 22; 16, 141).

4. Arrangement according to one of claims 1 to 3, in which the target value ($u_{32}$, $u_{188}$) for the current regulator (30; 146) is limited to a maximum value.

5. Arrangement according to one of claims 1 to 4, in which the second regulator (34; 144) is formed as a proportional regulator with a timing element of the first order.

6. Arrangement according to claim 5, in which the second regulator (34; 144) has a greater time constant (T1) than the current regulator (30; 146).

7. Arrangement according to one of the preceding claims, in which the actuating element of the current regulator (30; 146) is formed as a MOSFET transistor (24; 150), which is operated in linear mode.

8. Arrangement according to claim 7, in which the voltage drop ($U_T$) at the MOSFET transistor (24; 150) influences the target value ($u_{32}$; $u_{188}$) of the current regulator (30; 146) via the second regulator (30; 146).

9. Arrangement according to claim 8, in which the voltage drop ($U_T$) at the MOSFET transistor (24; 150) corresponds substantially to the alternating voltage portion of the voltage ($U_{ZK}$) at the intermediate circuit (14, 22; 16, 141).

10. Arrangement according to one or more of the preceding claims, in which an arrangement (38) is provided, which is controlled in operation by the voltage ($U_B$) of the d.c. system and reduces the current (i) through the current regulator (30; 146) in the event of the occurrence of an overvoltage.

11. Arrangement according to one or more of the preceding claims, in which an electronic fuse (40) is provided, which depending on the voltage at an actuating element (24) of the current regulator (30) causes a switch-off of the arrangement (10) if this voltage rises above a preset value.

12. Arrangement according to claim 11, in which an automatic reset device (260, 262, 276, 282, 284, 286) is assigned to the electronic fuse (240), which device causes reactivation of the current regulator (30) at a preset time interval following deactivation.

13. Arrangement according to one or more of the preceding claims, in which a time delay circuit (fig. 8) is provided, which deactivates the current regulator (146) during a preset time span following switch-on.

14. Arrangement according to one or more of the preceding claims, in which a Zener diode (300) is arranged parallel to the actuating element (24) of the current regulator (30), which diode becomes conductive if this actuating element (24) becomes continuously nonconductive due to a defect,
and then takes over the supply of power to a connected consumer (302).

15. Arrangement according to one of the preceding claims, in which the d.c. motor is formed as a brushless d.c. motor (12).

16. Arrangement according to one of the preceding claims, in which one of the supply lines of the d.c. system ($U_B$) serves to transmit signals to or from a connected d.c. motor (44).

17. Arrangement according to one of the preceding claims, in which a dedicated regulator (52) is assigned to the connected d.c. motor (12).

**Revendications**

1. Dispositif pour alimenter un moteur à courant continu (12) à partir d'un réseau à courant continu ($U_B$), lequel dispositif présente :

   un circuit intermédiaire à courant continu (14, 22 ; 16, 141) auquel ce moteur à courant continu (12) peut être connecté et auquel est associé un condensateur (21) qui permet d'alimenter brièvement le moteur à courant continu (12) en énergie ; un premier régulateur de courant (30 ; 146) servant à connecter le circuit intermédiaire à courant continu (14, 22 ; 16, 141) au réseau à courant continu ($U_B$) pour amener un courant (i) essentiellement constant au condensateur (21) associé au circuit intermédiaire et au moteur à courant continu (12) par l'intermédiaire d'un transistor de réglage (24) fonctionnant en actionneur linéaire, une chute de tension ($U_T$) se produisant à ce transistor de réglage ; un deuxième régulateur (34 ; 144) servant à fournir une valeur de consigne ($u_{32}$, $u_{188}$) pour le premier régulateur de courant (30 ; 146), auquel deuxième régulateur (34 ; 144) peut être amenée comme valeur réelle une tension qui correspond essentiellement à la chute de tension ($U_T$) au transistor de réglage (24) fonctionnant en actionneur linéaire ou qui est à peu près proportionnelle à cette chute de tension, pour, au moyen du deuxième régulateur (34 ; 144), adapter la valeur de consigne ($u_{32}$, $u_{188}$) du premier régulateur de courant (30 ; 146) à différentes charges du moteur à courant continu (12).

2. Dispositif selon la revendication 1, dans lequel une tension qui est influencée par la tension ($U_{ZK}$) au moteur à courant continu (12) peut être amenée comme valeur réelle au deuxième régulateur (34 ; 144).

3. Dispositif selon la revendication 1 ou 2, dans lequel la chute de tension ($U_T$) au transistor de réglage (30 ; 146) correspond à peu près à la composante de tension alternative de la tension au circuit intermédiaire (10, 22 ; 16, 141).

4. Dispositif selon l'une des revendications 1 à 3, dans lequel la valeur de consigne ($u_{32}$, $u_{188}$) pour le régulateur de courant (30 ; 146) est limitée à une valeur maximale.

5. Dispositif selon l'une des revendications 1 à 4, dans lequel le deuxième régulateur (34 ; 144) est réalisé sous la forme d'un régulateur proportionnel avec un élément de temporisation du premier ordre.

6. Dispositif selon la revendication 5, dans lequel le deuxième régulateur (34 ; 144) présente une constant de temps (T1) plus grande que le régulateur de courant (30 ; 146).

7. Dispositif selon l'une des revendications précédentes, dans lequel l'actionneur du régulateur de courant (30 ; 146) est réalisé sous la forme d'un transistor MOSFET (24 ; 150) qui fonctionne en régime linéaire.

8. Dispositif selon la revendication 7, dans lequel la chute de tension ($U_T$) au transistor MOSFET (24 ; 150) influence par l'intermédiaire du deuxième régulateur (30 ; 146) la valeur de consigne ($u_{32}$, $u_{188}$) du régulateur de courant (30 ; 146).

9. Dispositif selon la revendication 8, dans lequel la chute de tension ($U_T$) au transistor MOSFET (24 ; 150) correspond essentiellement à la composante de tension alternative de la tension ($U_{ZK}$) au circuit intermédiaire (14, 22 ; 16, 141).

10. Dispositif selon l'une ou plusieurs des revendications précédentes, dans lequel il est prévu un dispositif (38) qui est commandé en fonctionnement par la tension ($U_B$) du réseau à courant continu et qui, en cas de survenue d'une surtension, réduit le courant (i) à travers le régulateur de courant (30 ; 146).

11. Dispositif selon l'une ou plusieurs des revendications précédentes, dans lequel il est prévu un fusible électronique (40) qui provoque une coupure du dispositif (10) en fonction de la tension à un actionneur (24) du régulateur de courant (30) lorsque cette tension augmente au-delà d'une valeur prédéfinie.

12. Dispositif selon la revendication 11, dans lequel au fusible électronique (240) est associé un dispositif de rappel automatique (260, 262, 276, 282, 284, 286) qui provoque une nouvelle activation du régulateur de courant (30) après un intervalle de temps prédéfini après une désactivation.

**13.** Dispositif selon l'une ou plusieurs des revendications précédentes, dans lequel il est prévu un circuit de temporisation (fig. 8) qui désactive le régulateur de courant (146) pendant un intervalle de temps prédéfini après la mise sous tension.

**14.** Dispositif selon l'une ou plusieurs des revendications précédentes, dans lequel une diode Zener (300) est disposée en parallèle sur l'actionneur (24) du régulateur de courant (30), laquelle devient conductrice quand cet actionneur (24) devient durablement non conducteur du fait d'un défaut,
et assure alors l'alimentation électrique d'un consommateur (302) connecté.

**15.** Dispositif selon l'une des revendications précédentes, dans lequel le moteur à courant continu est réalisé sous la forme d'un moteur à courant continu (12) sans collecteur.

**16.** Dispositif selon l'une des revendications précédentes, dans lequel une des lignes d'amenée du réseau à courant continu ($U_B$) sert à la transmission de signaux vers ou depuis un moteur à courant continu (44) connecté.

**17.** Dispositif selon l'une des revendications précédentes, dans lequel un régulateur dédié (52) est associé au moteur à courant continu (12) connecté.

Fig. 1

EP 1 262 014 B1

17

Fig. 2

Fig.3

Fig.4

Fig. 5

Fig. 6

Fig. 7

EP 1 262 014 B1

Fig. 8

Fig. 9

Fig. 10

EP 1 262 014 B1

EP 1 262 014 B1

Fig.11

24

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5898296 A
- DE 2346380